# EUROPEAN PATENT SPECIFICATION

(11) **EP 2 249 105 B1**
(45) Date of publication and mention of the grant of the patent: **18.04.2012**
(21) Application number: 10160915.4
(22) Date of filing: 23.04.2010
(51) Int. Cl.: F25B 15/04, F25B 30/04

(54) **Absorption heat pump with burner power modulation**
Absorptionswärmepumpe mit Modulation der Brennerleistung
Pompe à chaleur par absorption dotée d'une modulation de la puissance du brûleur

(30) Priority: 29.04.2009 IT MI20090729
(43) Date of publication of application: 10.11.2010
(73) Proprietor: Guerra, Marco, 24129 Bergamo (BG) (IT)
(72) Inventor: Guerra, Marco, 24129 Bergamo (BG) (IT)
(74) Representative: Vanosi, Adelio Valeriano

(56) References cited:
- EP-A2- 0 757 215
- JP-A- 8 159 591
- JP-A- 8 271 080

## Description

The present invention relates to an absorption heat pump with burner power modulation.

In known heat pumps used for heating, the facility to modulate the thermal power delivered (and that supplied to the generator) makes the use of such machines much more flexible. This results in a greater ease of coupling to the system thermal load, delivered temperature precision and better efficiency related to the drastic reduction of transients.

Current market research suggests that efficiency requirements for modulation heat pumps have risen to COP values greater than 1.6, with seasonal performance greater than 1.3. Burner modulation can hence reach 20% of the rated power.

A heating heat pump with modulation is already available in absorption technology. In this case the machine power can be modulated to 50% of the burner power.

Fixed throughput throttling members are used to modulate the generator power of existing absorption heat pumps, hence accepting sub-optimal operating conditions. In this respect, the high flow of poor solution leaving the generator when supplied with a reduced heat quantity results in an increase in the contained refrigerant concentration of up to values from 10 to 20 points of mass concentration. Such a high solution concentration results in flash evaporation (effect related to refrigerant boiling consequent on a sudden pressure drop to a value less than the saturation value of the liquid at the given concentration) downstream of the throttling member, with a downstream liquid temperature reduction even of 35°C. The result of this is lesser heat recovery in the heat exchanger and hence a lower cycle efficiency.

In other modulating pumps, for example those described in US 6,748,752, when the thermal generator power is modulated, the poor solution flow is controlled by modulating valves (variable flow restrictors) to maintain the cycle operating parameters under optimum conditions. These devices present, inter alia, the following drawbacks.

It is difficult to construct modulating valves because of the precision required in regulating fluid flows generally of very low absolute value (from 45 kg/h at full load operation to 9 kg/hr with partial load operation).

They are also sensitive to dirt originating from the bottom of the vapour generator.

They also have a high cost and require a further actuator, typically electronic/electromechanical.

A further drawback deriving from modulation is that the low liquid flow (when the valve allows only low flow passage) means that neither film heat exchangers nor traditional heat exchangers are able to operate correctly. In this case, efficiency falls to very low values (so nullifying flow modulation).

EP 0757215 describes a heat pump according to the pre-characterizing part of claim 1.

An object of the present invention is to provide a heat pump in which the efficiency does not fall greatly when the generator power is modulated, down to 20% of the rated power.

This and other objects are attained by a heat pump formed in accordance with the technical teachings of the accompanying claims. Advantageously the pump in question is also able to operate with excellent efficiency even under extreme conditions, i.e. at very low external temperatures and if very hot water (>65°-C) is required.

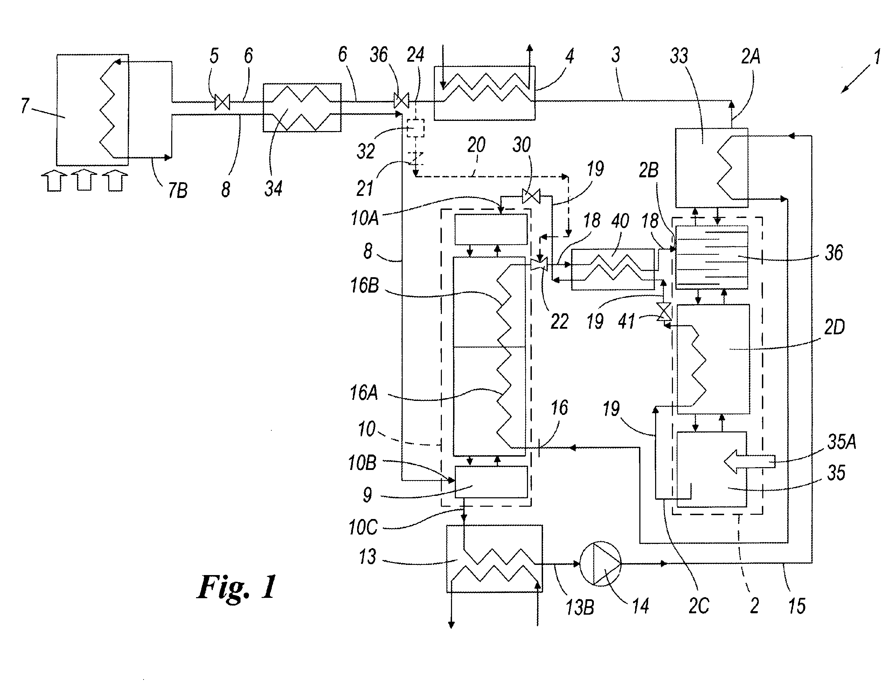

Further characteristics and advantages of the invention will be apparent from the description of a preferred but non-exclusive embodiment of the heat pump, illustrated by way of non-limiting example in the accompanying drawings, in which the single figure shows a simplified scheme of the heat pump of the present invention.

With reference to said figure, this shows a heat pump indicated overall by the reference numeral 1.

It operates with a cycle using a first fluid, in this specific case ammonia, as refrigerant, this being absorbed in a second fluid which in this case is water. The absorption heat pump comprises a conventional generator 2 or desorber presenting a finned gas burner 35, which feeds a conventional plate column 36. The burner 35 comprises a control module 35A for the delivered power.

The plate column 36 is connected to a rectifier 33, described hereinafter. The rectified vapour outlet of the generator is connected via a first line 3 to a condenser 4 of conventional type, positioned in heat exchange contact with a transmission fluid which feeds the heating plant. This fluid is typically water fed into the plant by a pump, not shown.

A countercurrent heat exchanger 34 is provided downstream of the condenser 4 in a second line 6 connecting the condenser to an evaporator 34 via a lamination valve 5, to exchange heat with the vapour circulating through a third line 8 connecting the evaporator 7 to an inlet 10B of an absorber 10. A further lamination valve 36 is provided upstream of the heat exchanger 34.

As already stated, an evaporator outlet 7B is connected by the third line 8 to an inlet 10B for vapour from said first fluid into the absorber 10, and specifically into a mixing zone 9.

The absorber 10 comprises a rich solution outlet 10C (ammonia absorbed in water) connected to a heat exchanger 13 in heat exchange contact with the transmission fluid of the heating plant.

An outlet 13B of the heat exchanger is connected to the suction side of a conventional pump 14, the delivery side of which is connected via a fourth line to an inlet 16 of a circuit 16A, 16B in heat exchange contact with the absorber 10.

The fourth line 15 lies in heat transmission contact with the rectifier 33 from which the rich ammonia solution subtracts heat to facilitate condensation of water vapour.

The circuit 16A, 16B subtracts heat from the absorber to hence transfer it to the rich solution originating from the pump 14 before being fed into the generator 2. This circuit is divided into two parts only for reasons of description. In this respect, in the first part of the circuit 16A the rich solution rises its temperature, while in the second part 16B the ammonia present in the solution begins to evaporate (at the pressure present in the circuit 16A, B) to essentially anticipate the work done by the generator 2. That part of the absorber involved with the circuit part 16B is commonly known as a GAX cycle.

A fifth line 18 extending from the heat exchanger 10 connects an outlet of the circuit 16A, 16B to an ammonia enriched solution (plus ammonia vapour) inlet 2B of the generator 2.

At the generator base, in proximity to the burner 35, an outlet 2C is provided from which a poor ammonia solution is directed, via a sixth line 19 provided with at least one lamination valve 30, to a poor solution inlet 10A provided in the absorber 10, after yielding heat to the fluids present in the generator in a central portion 2D thereof.

According to the present invention the line 19, which extends from the central portion 2D of the desorber, comprises a lamination valve 41, downstream of which there is an intermediate heat exchanger 40, preferably of the countercurrent type, enabling heat to be exchanged between the poor solution present in the line 19 and the rich solution flowing through the line 18 from the absorber 10 and directed to the desorber 2.

The pressure to which the poor solution is brought by the valve 41 is an intermediate value between the pressure of the generator 2 and the pressure of the absorber 10, enabling flash evaporation at the first valve 41 to be reduced under most working conditions of the heat pump, as the intermediate pressure downstream of the valve 41 means that the solution is below the boiling point. Advantageously, in the intermediate heat exchanger 40 the poor solution yields heat to the rich solution entering the generator. Consequently the poor solution becomes cold. This enables flash evaporation to also be avoided downstream of the valve 30. Downstream of the valve 30 the solution temperature is similar to that which would exist in the case of flash evaporation without the heat exchanger 40, however the solution is all in the liquid phase and, having yielded some heat to the rich solution directed to the absorber, efficiency is improved.

The proposed system provides very high cycle performance when this is under standard conditions (GAX effect), whereas when under modulation conditions it enables a poor solution flow to be maintained such as to always maintain the flow properly distributed and the surfaces of the absorber 10 wetted, the efficiency of this latter being much influenced by the transiting mass flow.

It has been found that a system of this type enables better performance to be obtained than traditional heat pumps which do not present the system herein described.

By way of example, it has been found that for 50% generator modulation an efficiency improvement of about 10% is obtained compared with traditional absorption pumps, this value gradually increasing to 35% for modulation percentages of about 30% of the rated load.

If the intermediate heat exchanger 40 is of the tube-in-tube type, in which the poor solution of the line 19 flows through the annular conduit, the annular passage cross-section can be dimensioned such that when this section is fed with maximum liquid flow, only a small pressure drop (from 0.2 to 0.5 bar, preferably 0.35 bar) occurs at the heat exchanger outlet. This pressure drop does not negatively influence the full load operation given that the fluid has in any event to pass through the lamination valve 30 which reduces the pressure by a number of bars.

In the limit case of flash evaporation across the first lamination valve 41 (for example for generator loads < 25% of rated power) the solution mass flow would remain approximately unvaried, but certainly not the volumetric flow. The volumetric flow (two-phase) in the annular conduit would considerably increase (at least until the flash vapour has recondensed by the cooling due to heat exchange in the heat exchanger 40), to cause a pressure drop of even several bars (depending on the heat exchanger geometry and the extent of flash evaporation).

The second lamination valve 30 has a reduced pressure at its inlet, and as the lamination valves are calibrated orifice plates, the flow through which depends mainly on the pressure drop between their two ends (in addition to their geometry), the flow will be less. Hence an automatic static flow regulator system is obtained.

This system enables extreme modulation conditions and low evaporation pressures to be handled. Hence high performance can be maintained even under extensive modulation, and finally high seasonal COPS.

In contrast to the known art, moving members or electrical controls are not present.

This reduces system complexity, decreases costs and above all increases flexibility.

According to a particular embodiment of the present invention, a system (not necessarily provided and hence optional) is present for maintaining the top of the desorber plate column "colder' and reducing the rectifier load. To achieve this, the flow and/or NH₃ concentration of the rich solution entering the generator 2 is increased. This can be done by bleeding off part of the liquid refrigerant leaving the condenser and mixing it with the rich solution line entering the generator, by using the entrainment effect of a liquid-liquid injector.

According to the optional system, a point 22 for the introduction or feed of condensed vapour (liquid ammonia) into the rich ammonia solution is provided between the inlet 16 of the circuit composed of the first and second part 16A, 16B and the rich solution inlet 2B of the generator.

The introduction point 22 can be arranged in various plant positions, a particularly advantageous one of which is represented in the accompanying figure. A first introduction point is represented by a dashed line and indicated by the reference numeral 22. With this solution the withdrawal line 20 which extends from the withdrawal point 24 extends along the portion 20 and advantageously feeds into the venturi 22 shown in the figure. This is positioned in a circuit portion downstream of the second part 16B of the circuit.

Introducing bled refrigerant into the solution flow "costs" in terms of machine power (refrigerant flow to the evaporator). This cost can be minimized to obtain an advantage under certain conditions.

This introduction point is particularly advantageous when located in a point of the circuit 16A, 16B in which the solution present therein has a temperature close to that of the temperature resulting from mixing the two flows, i.e. the refrigerant flow and the solution flow. In this respect, adiabatic mixing of two liquid flows [for example 44% NH₃ in the solution, 99% NH₃ in the refrigerant] results in a flow at a temperature greater than the two inlet temperatures.

This optimum temperature is between 60°C and 90°C, preferably between 70°C and 80°C.

If the refrigerant bypass flow is for example 10% of the refrigerant, then ammonia concentration in the rich solution can increase by between 2 and 4%. This implies that the GAX regenerator (second portion 16B of the circuit) begins to reboil the solution at a temperature less by 4°C and 6°C, compared with when the ammonia concentration in the solution is less. For example, for an ammonia concentration of 44% in the solution, the boiling temperature at 20 bar is 103°C. By increasing the concentration to 47% with the bypass line 20, 20A, 20B, the boiling temperature falls to 97°C at the same pressure. The vapour regenerated hence "recovers" the expense of the bypass.

This results in a lowering of the desorber column and rectifier temperature by about 10-15°C, with considerable benefits.

The result is that for equal evaporator power there is a greater "load" at the condenser (which therefore has to be slightly over-dimensioned). However there is a lesser load at the rectifier and generator, which work at lower temperature.

This situation becomes very interesting precisely when high (> 65°C) water temperatures are required from the heating plant, or for generating domestic hot water. In this case, conventional heat pumps generate pressures and temperatures which cause the desorber column to "work" at its limit, so bringing the rectifier load to critical levels, and drastically reducing the refrigerant flow fed to the condenser (also because the GAX regenerator at these high pressures does not regenerate refrigerant vapour). Increasing the heat exchanger surfaces does not improve the situation, while at high temperatures the risk of surface corrosion increases. As previously explained, bypassing the refrigerant increases the rich solution concentrations, so extending system working conditions.

As an alternative to that already described, under determined temperature and pressure conditions the refrigerant can be injected or fed into the rich solution at a point between the first part 16A and second part 16B of the circuit. This solution is not represented in the figure, but the benefits obtainable are substantially the same.

In the two described embodiments, refrigerant injection or feed takes place preferably by means of a venturi, which enables the refrigerant to be "drawn" into the solution. However, injection can be effected by any other suitable means.

In addition to comprising a refrigerant non-return valve 32 for both the above embodiments, the refrigerant feed line 20 can also comprise a solenoid valve or the like which completely excluders the bypass line, hence enabling the heat pump to be used in a completely conventional manner.

It has been seen that by introducing the aforedescribed circuit modification, the heat pump operates under a wide variety of conditions, with much higher efficiencies than conventional heat pumps, especially when these conditions are extreme.

Various embodiments of the invention have been described, but others can be conceived by utilizing the same inventive concept. All the described components can be replaced by technically equivalent elements. Moreover the refrigerant and the liquid in which it is absorbed can be chosen at will in conformity with the necessary technical requirements.

## Claims

1. An absorption heat pump comprising a generator (2) or desorber associated with a device (35A) for modulating its power, the desorber generating, from a first fluid, vapour fed via a first line (3) to a first condenser (4) in heat exchange contact with a transmission fluid, downstream of the condenser there being provided a second line (6) entering an evaporator (7), the second line 6 comprising at least a first lamination valve (5), an evaporator outlet (7B) being connected by a third line (8) to an inlet (10B) for vapour from said first fluid into an absorber (10), comprising an outlet (10C) for an enriched solution of said first fluid absorbed in a second fluid, the outlet (10C) being connected to a heat exchanger (13) in heat transmission contact with the transmission fluid, an outlet (13B) of the heat exchanger being connected to a suction side of a pump (14), the delivery side of which is connected by a fourth line (15) to an inlet (16) of a circuit (16A, 16B) in heat transmission contact with the absorber (10), a fifth line (18) connecting said circuit (16A, 16B) to a rich solution inlet (2B) of the generator (2), the generator having a poor solution outlet (2C) connected by a sixth line (19) provided with a lamination valve (30) to a poor solution inlet (10A) provided in the absorber (10), the pump further comprising an intermediate heat exchanger (40) arranged to bring the fluids present in the sixth line (19) and in the fifth line (18) into heat exchange contact, **characterized in that** a lamination valve (41) is provided in the sixth line (19) prior to the inlet to the intermediate heat exchanger (40) to lower the poor solution pressure in the intermediate heat exchanger (40).

2. A pump as claimed in the preceding claim, wherein the heat exchanger is of concentric tube type, the poor solution flowing through the annular passage, the annular passage cross-section being sized such as to provide only a slight pressure drop at the heat exchanger outlet when this is traversed exclusively by liquid at the maximum throughput allowed by the heat pump.

3. A pump as claimed in the preceding claim, wherein the slight pressure drop is between 0.05 and 0.5 bar.

4. A heat pump as claimed in one or more of the preceding claims, wherein an introduction point (22) for condensed vapour from said first fluid circulating through the circuit (16A, 16B) is provided between the inlet (16) of the circuit (16A, 16B) and the rich solution inlet of the intermediate heat exchanger (40).

5. A heat pump as claimed in claim 4, wherein the condensed vapour is withdrawn at a withdrawal point (24) positioned directly downstream of the condenser by a withdrawal line (20).

6. A heat pump as claimed in claim 5, wherein a non-return valve (21) is provided in the withdrawal line (20), between the withdrawal point and the introduction point.

7. A heat pump as claimed in claim 4, wherein said introduction point is provided between a first (16A) and a second (16B) portion of said circuit.

8. A heat pump as claimed in claim 4 wherein said introduction point is provided downstream of the second circuit portion (16B) outside the absorber (10).

9. A heat pump as claimed in claim 5 wherein said withdrawal line comprises a valve (32) arranged to exclude it.

10. A heat pump as claimed in claim 4 wherein a rectifier (32) in heat exchange contact with the fluid leaving the pump (14) is provided between the generator (2) and condenser (4).

11. A heat pump as claimed in one or more of the preceding claims wherein the sixth line (19) is in heat exchange contact with a central portion (2D) of the generator.

12. A method for improving the efficiency of absorption heat pumps when under desorber power modulation conditions, comprising the step of exchanging heat between the rich solution, before it enters the desorber, and the poor solution withdrawn from the desorber, before this poor solution is fed into the desorber, **characterized in that** before undergoing heat exchange, the poor solution pressure is lowered to an intermediate value between the desorber pressure and the absorber pressure.

13. A method as claimed in claim 12, wherein refrigerant is bled off downstream of the condenser and mixed with the rich solution after this latter has been at least partially heated by the absorber and before it undergoes heat exchange with the poor solution.

14. A method as claimed in the preceding claim, wherein the refrigerant is bled off between the condenser and the evaporator.

15. A method as claimed in one or more of the preceding claims, wherein the refrigerant is mixed with the rich solution at a point in which the difference between the temperature of the solution before its mixing and the temperature resulting from mixing the solution with the refrigerant is between -5°C and 5°C.

16. A method as claimed in one or more of the preceding claims, wherein said bleeding can be excluded, depending on the pump working conditions.

## Patentansprüche

1. Absorptionswärmepumpe umfassend einen Generator (2) oder Desorber, der mit einer Vorrichtung (35A) zum Modulieren seiner Leistung assoziiert ist, wobei der Desorber aus einer ersten Flüssigkeit Dampf erzeugt, welcher über eine erste Leitung (3) einem ersten Kondensator (4) zugeführt wird, der in Wärmeaustauschkontakt mit einer Übertragungsflüssigkeit ist, wobei stromabwärts von dem Kondensator eine zweite Leitung (6), die in einen Verdampfer (7) eintritt, bereitgestellt ist, wobei die zweite Leitung (6) mindestens ein erstes Lamellenventil (5) umfasst, wobei ein Verdampferauslass (7B) mittels einer dritten Leitung (8) mit einem Einlass (10B) für Dampf der ersten Flüssigkeit in einen Absorber (10) verbunden ist, welcher einen Auslass (10C) für eine angereicherte Lösung der ersten Flüssigkeit, die in einer zweiten Flüssigkeit absorbiert ist, umfasst, wobei der Auslass (10C) mit einem Wärmetauscher (13) in Wärmeübertragungskontakt mit der Übertragungsflüssigkeit verbunden ist, wobei ein Auslass (13B) des Wärmetauschers mit einer Ansaugseite einer Pumpe (14) verbunden ist, wobei deren Druckseite mittels einer vierten Leitung (15) mit einem Einlass (16) eines Kreises (16A, 16B) in Wärmeübertragungskontakt mit dem Absorber (10) verbunden ist, wobei eine fünfte Leitung (18) den Kreis (16A, 16B) mit einem Einlass (2B) des Generators (2) für eine angereicherte Lösung verbindet, wobei der Generator einen Auslass (2C) für eine abgereicherte Lösung hat, der mittels einer sechsten Leitung (19), die einem Lamellenventil (30) bereitgestellt ist, mit einem Einlass (10A) für eine abgereicherte Lösung, der in dem Absorber (10) bereitgestellt ist, verbunden ist, wobei die Pumpe weiterhin einen Zwischenwärmetauscher (40) umfasst, der angeordnet ist, um die Flüssigkeiten, die in der sechsten Leitung (19) und in der fünften Leitung (18) anwesend sind, in Wärmeaustauschkontakt zu bringen, **dadurch gekennzeichnet, dass** ein Lamellenventil (41) in der sechsten Leitung (19) vor dem Einlass zu dem Zwischenwärmetauscher (40) bereitgestellt ist, um den Druck der abgereicherten Lösung in dem Zwischenwärmetauscher (40) zu senken.

2. Pumpe, wie in dem vorangehenden Anspruch beansprucht, wobei der Wärmetauscher von dem Typus mit konzentrischen Rohren ist, wobei die abgereicherte Lösung durch den ringförmigen Durchlass fliest, wobei der Querschnitt des ringförmigen Durchlasses derart dimensioniert ist, dass er nur einen geringfügigen Druckabfall an dem Wärmetauscherauslass bereitstellt, wenn dieser ausschließlich von Flüssigkeit mit dem maximalen Durchsatz, der von der Wärmepumpe erlaubt wird, durchflossen wird.

3. Pumpe, wie in dem vorangehenden Anspruch beansprucht, wobei der geringfügige Druckabfall zwischen 0,05 und 0,5 bar ist.

4. Wärmepumpe, wie in einem oder mehreren der vorangehenden Ansprüchen beansprucht, wobei ein Zuführpunkt (22) für kondensierten Dampf der ersten Flüssigkeit, die durch den Kreis (16A, 16B) zirkuliert, zwischen dem Einlass (16) des Kreises (16A, 16B) und dem Einlass der angereicherten Lösung des Zwischenwärmetauschers (40) bereitgestellt ist.

5. Wärmepumpe, wie in Anspruch 4 beansprucht, wobei der kondensierte Dampf mittels einer Entnahmeleitung (20) von einem Entnahmepunkt (24) entnommen wird, der direkt stromabwärts des Kondensators positioniert ist.

6. Wärmepumpe, wie in Anspruch 5 beansprucht, wobei ein Rückschlagventil (21) in der Entnahmeleitung (20) zwischen dem Entnahmepunkt und dem Zuführpunkt bereitgestellt ist

7. Wärmepumpe, wie in Anspruch 4 beansprucht, wobei der Zuführpunkt zwischen einem ersten (16A) und einem zweiten (16B) Abschnitt des Kreises bereitgestellt ist.

8. Wärmepumpe, wie in Anspruch 4 beansprucht, wobei der Zuführpunkt stromabwärts des zweiten Kreisabschnittes (16B) außerhalb des Absorbers (10) bereitgestellt ist.

9. Wärmepumpe, wie in Anspruch 5 beansprucht, wobei die Entnahmeleitung ein Ventil (32) umfasst, welches angeordnet ist, um sie zu schließen.

10. Wärmepumpe, wie in Anspruch 4 beansprucht, wobei ein Gleichrichter (32) in Wärmeaustauschkontakt mit der Flüssigkeit, die die Pumpe (14) verlässt, zwischen dem Generator (2) und dem Kondensator (4) bereitgestellt ist.

11. Wärmepumpe, wie in einem oder mehreren der vorangehenden Ansprüche beansprucht, wobei die sechste Leitung (19) in Wärmeaustauschkontakt mit einem zentralen Abschnitt (2D) des Generators ist.

12. Verfahren zum Verbessern der Effizienz von Absorptionswärmepumpen, wenn diese unter Desorber-Leistungsmodulationsbedingungen sind, umfassend den Schritt des Austauschens von Wärme zwischen der angereicherten Lösung, bevor diese in den Desorber eintritt, und der abgereicherten Lösung, die von dem Desorber entnommen wird, bevor die abgereicherte Lösung dem Desorber zugeführt wird, **dadurch gekennzeichnet, dass** bevor sie Wärmeaustausch unterzogen wird, der Druck der abgereicherten Lösung gleich einem Zwischenwert gesenkt wird, der zwischen dem Desorberdruck und dem Absorberdruck liegt.

13. Verfahren wie in Anspruch 12 beansprucht, wobei Kühlmittel stromabwärts des Kondensators abgeleitet wird und mit der angereicherten Lösung vermischt wird, nachdem die zuletzt genannte zumindest teilweise mittels des Absorbers erhitzt wurde und bevor sie Wärmeaustausch mit der abgereicherten Lösung unterzogen wird.

14. Verfahren wie in den vorangehenden Ansprüchen beansprucht, wobei das Kühlmittel zwischen dem Kondensator und dem Verdampfer abgeleitet wird.

15. Verfahren wie in einem oder mehreren der vorangehenden Ansprüche beansprucht, wobei das Kühlmittel mit der angereicherten Lösung an einem Punkt vermischt wird, an dem der Unterschied zwischen der Temperatur der Lösung vor ihrer Mischung und der Temperatur, die aus der Mischung der Lösung mit dem Kühlmittel resultiert, zwischen -5°C und 5°C ist.

16. Verfahren wie in einem oder mehreren der vorangehenden Ansprüche beansprucht, wobei das Ableiten ausgeschlossen werden kann, abhängig von den Arbeitsbedingungen der Pumpe.

## Revendications

1. Pompe à chaleur à absorption comprenant un générateur (2) ou désorbeur associé à un dispositif (35A) pour moduler la puissance, le désorbeur générant, à partir d'un premier fluide, de la vapeur alimentée par l'intermédiaire d'une première ligne (3) vers un premier condenseur (4) en contact d'échange de chaleur avec un fluide de transmission, une deuxième ligne (6) entrant dans un évaporateur (7) étant prévue en aval du condenseur, la deuxième ligne 6, comprenant au moins une vanne de laminage (5), une sortie (7B) de l'évaporateur étant reliée par une troisième ligne (8) à une entrée (10B) pour de la vapeur provenant dudit premier fluide dans un absorbeur (10), comprenant une sortie (10C) pour une solution enrichie dudit premier fluide absorbé dans un second fluide, la sortie (10C) étant reliée à un échangeur de chaleur (13) en contact de transmission de chaleur avec le fluide de transmission, une sortie (13B) de l'échangeur de chaleur étant reliée à un côté aspiration d'une pompe (14), dont le côté refoulement est relié par une quatrième ligne (15) à une entrée (16) d'un circuit (16A, 16B) en contact de transmission de chaleur avec l'absorbeur (10), une cinquième ligne (18) reliant ledit circuit (16A, 16B) à une entrée de solution riche (2B) du générateur (2), le générateur ayant une sortie de solution pauvre (2C) reliée par une sixième ligne (19) munie d'une vanne de laminage (30) vers une entrée de solution pauvre (10A) prévue dans l'absorbeur (10), la pompe comprenant en outre un échangeur de chaleur intermédiaire (40) agencé pour amener les fluides présents dans la sixième ligne (19) et dans la cinquième ligne (18) en contact d'échange de chaleur, **caractérisée en ce qu'**une vanne de laminage (41) est prévue dans la sixième ligne (19) avant l'entrée dans l'échangeur de chaleur intermédiaire (40) pour abaisser la pression de la solution pauvre dans l'échangeur de chaleur intermédiaire (40).

2. Pompe selon la revendication précédente, dans lequel l'échangeur de chaleur est de type tube concentrique, la solution pauvre s'écoulant à travers le passage annulaire, la section transversale du passage annulaire étant dimensionnée de manière à fournir seulement une faible diminution de pression au niveau de la sortie de l'échangeur de chaleur lorsqu'il est traversé exclusivement par des liquides au débit maximum autorisé par la pompe à chaleur.

3. Pompe selon la revendication précédente, dans lequel la faible chute de pression est comprise entre 0,05 et 0,5 bar.

4. Pompe à chaleur selon l'une ou plusieurs des revendications précédentes, dans lequel un point d'introduction (22) pour de la vapeur condensée provenant dudit premier fluide circulant au travers du circuit (16A, 16B) est prévu entre l'entrée (16) du circuit (16A, 16B) et l'entrée de solution riche de l'échangeur de chaleur intermédiaire (40).

5. Pompe à chaleur selon la revendication 4, dans lequel la vapeur condensée est prélevée au niveau d'un point de prélèvement (24) positionné directement en aval du condenseur par une ligne de prélèvement (20).

6. Pompe à chaleur selon la revendication 5, dans lequel un clapet de non-retour (21) est prévu dans la ligne de prélèvement (20), entre le point de prélèvement et le point d'introduction.

7. Pompe à chaleur selon la revendication 4, dans lequel ledit point d'introduction est prévu entre une première (16A) et une seconde (16B) partie dudit circuit.

8. Pompe à chaleur selon la revendication 4, dans lequel ledit point d'introduction est prévu en aval de la seconde partie de circuit (16B) à l'extérieur de l'absorbeur (10).

9. Pompe à chaleur selon la revendication 5, dans lequel ladite ligne de prélèvement comprend une soupape (32) agencée pour l'exclure.

10. Pompe à chaleur selon la revendication 4, dans lequel un redresseur (32) en contact d'échange de chaleur avec le fluide sortant de la pompe (14) est prévu entre le générateur (2) et le condenseur (4).

11. Pompe à chaleur selon l'une ou plusieurs des revendications précédentes, dans lequel la sixième ligne (19) est en contact d'échange de chaleur avec une partie centrale (2D) du générateur.

12. Procédé pour améliorer l'efficacité des pompes à chaleur à absorption, lorsqu'elles sont soumises à des conditions de modulation de puissance de désorbeur, comprenant l'étape consistant à faire un échange de chaleur entre la solution riche, avant qu'elle n'entre dans le désorbeur, et la solution pauvre prélevée à partir du désorbeur, avant que cette solution pauvre ne soit introduite dans le désorbeur, **caractérisé en ce qu'**avant de subir un échange de chaleur, la pression de la solution pauvre est abaissée à une valeur intermédiaire entre la pression du désorbeur et la pression de l'absorbeur.

13. Procédé selon la revendication 12, dans lequel du fluide frigorigène est prélevé en aval du condenseur et mélangé avec la solution riche après que cette dernière a été au moins partiellement chauffée par l'absorbeur et avant qu'elle ai subi un échange de chaleur avec la solution pauvre.

14. Procédé selon la revendication précédente, dans lequel le fluide frigorigène est prélevé entre le condenseur et l'évaporateur.

15. Procédé selon l'une ou plusieurs des revendications précédentes, dans lequel le fluide frigorigène est mélangé avec la solution riche au niveau d'un point dans lequel la différence entre la température de la solution avant son mélange et la température résultant du mélange de la solution avec le fluide frigorigène est comprise entre -5 °C et 5 °C.

16. Procédé selon l'une ou plusieurs des revendications précédentes, dans lequel ledit prélèvement peut être exclu, en fonction des conditions de fonctionnement de la pompe.
